# EUROPEAN PATENT APPLICATION

(11) **EP 1 510 627 A1**
(43) Date of publication of application: **02.03.2005**
(21) Application number: 04394056.8
(22) Date of filing: 27.08.2004
(51) Int. Cl.: E03F 5/16, B01D 17/12, B01D 17/032, B01D 21/24, B01D 21/34

(54) **A waste treatment system**

(30) Priority: 29.08.2003 EP 03394081
(71) Applicant: Kingspan Holdings (IRL) Limited, Kingscourt (County Cavan) (IE)
(72) Inventor: Norton, Michael, c/o Klargester Environmental Ltd., Aylesbury Bucks HP22 5EW (GB)
(74) Representative: O'Brien, John Augustine

(57) **Abstract**

The invention provides a waste treatment device (1) comprising a housing (2), a waste inlet (3) for waste, a grease settlement zone (II) within the housing, a grease collector (5), a grease outlet (6) from the grease settlement zone (II), and a waste outlet (8). The device has a static fill level *F*, and the grease collector (5) which comprises a grease collector barrier (12) is located in proximity to the static fill level *F*. The grease collector barrier (12) configured to prevent the flow of waste to the grease outlet (6) when waste is at rest in the device and to allow overflow of grease to the grease outlet (6) when waste is flowing through the device (1).

## Description

### Introduction

### Field of the Invention

The invention relates to a waste treatment system, and in particular the invention relates to a grease separator or collector device and system.

### Prior Art Discussion

Waste from industrial or catering facilities often includes grease. A device for grease removal is often installed at such facilities where grease removal is not the main operation, and is not the expertise of staff at the facility. If the device is not properly operated then the grease is not removed. Furthermore, if grease is not cleared from a grease treatment/removal system then it will often accumulate and wash through the unit with adverse effects on the performance of downstream plants or clogging up sewers or fouling up pumps and associated controls and with adverse effects on the environment.

GB606747 describes a grease interceptor device. This device has the disadvantages that it is complex in design comprising moving parts and also that it is necessary for a user to monitor grease build up and to operate the device to enable grease removal.

The present invention addresses these problems.

### Statements of invention

According to the invention there is provided a waste treatment device comprising a housing, an inlet for waste, a grease settlement zone within the housing, a grease collector, a grease outlet from the grease settlement zone, and a waste outlet, wherein the device has a static fill level, and the grease collector comprises a grease collector barrier located in proximity to the static fill level and configured to prevent the flow of waste to the grease outlet when waste is at rest in the device and to allow overflow of grease to the grease outlet when waste is flowing through the device.

The device of the invention operates automatically to collect grease from the waste passing through the device. This has the advantages that grease build up is avoided and the device operates very effectively and efficiently.

In one embodiment the grease collector barrier is arranged such that inflow of waste into the device results in a surge of the waste and a rise in the level of waste in the device which causes the grease collector barrier to act as a weir.

The waste treatment device is operated automatically by the force generated by the inflow of waste into the device. It is therefore energy efficient and does not require monitoring and user intervention to effect grease removal.

In another embodiment the device comprises an inlet baffle and an outlet baffle arranged between the waste inlet and the waste outlet.

In a further embodiment the inlet baffle is spaced apart from the waste inlet.

In one embodiment the outlet baffle is spaced apart from the waste outlet and the inlet baffle.

In another embodiment the inlet and outlet baffles extend across the housing and are connected thereto.

In a further embodiment the baffles comprise a plate form.

In one embodiment waste flows between the inlet and waste outlet, and the inlet and outlet baffles extend across the flow path of waste through the device.

In another embodiment the inlet baffle together with the housing defines a waste inlet section of the device, and the waste inlet is arranged at the inlet section.

In a further embodiment the outlet baffle together with the housing defines a waste outlet section of the device, and the waste outlet is arranged at the waste outlet section.

In one embodiment the grease settlement zone is defined by the inlet baffle and the outlet baffle together with the housing.

In another embodiment the grease settlement zone is configured to allow waste to settle and to allow grease to congeal and form a top grease layer.

By virtue of the arrangement of the components within the housing the flow of waste is controlled to provide sufficient residence time to allow the waste to settle out from the in the form of a top grease layer separate from the remaining waste. Such an arrangement allows for grease to be effectively removed from the waste.

In a further embodiment the static fill level is defined by the level of the waste outlet.

In one embodiment the grease collector barrier is located in the grease settlement zone.

In another embodiment the grease collector barrier comprises an upper weir edge which is arranged at a level within 16 mm of the level of the static waste fill level of the device.

In a further embodiment the upper weir edge of grease collector barrier is arranged at a level above, below, or substantially equal with, the static waste fill level of the device.

In one embodiment the grease collector barrier is fixed.

In another embodiment the grease collector barrier is arranged in proximity to the outlet baffle.

In a further embodiment the grease collector comprises a grease collector channel arranged between the grease collector barrier and the grease outlet, and which defines a passageway for grease to the grease outlet.

In one embodiment the grease collector is arranged such that the passageway slopes downwardly towards the grease outlet.

In another embodiment the grease collector extends between the side walls of the housing.

In a further embodiment the grease collector has a substantially u-shaped trough form having front, bottom and rear walls.

In one embodiment the front wall comprises the grease collector barrier.

In another embodiment the rear wall has an upper edge which is arranged at a level above the static fill level of the device to prevent waste from passing into the grease collector other than by passing over the grease collector barrier.

In a further embodiment the rear wall of the grease collector is defined by the outlet baffle.

In one embodiment the level of the waste outlet is fixed.

In another embodiment the inlet is arranged at a level above the static waste fill level of the device.

In a further embodiment the level of the inlet is fixed.

In one embodiment the housing comprises a base, and side wall means extending upwardly from the base to define a waste container.

In another embodiment the side wall means comprise front and rear end walls connected by side walls defining a generally parallelepiped form.

According to another aspect of the invention there is provided a waste treatment system comprising a waste treatment device of the invention and a grease storage vessel connected to the grease outlet.

In one embodiment the grease storage vessel includes a level sensor.

In another embodiment the inlet of the grease storage vessel is arranged at a level below that of the grease outlet to facilitate the flow of grease to the storage vessel.

According to a further aspect of the invention there is provided a method for automatically collecting grease from waste containing grease comprises the steps of:
filling a waste treatment device having a grease outlet to the waste fill level of the device
allowing the waste to settle in the device such that grease rises to the surface of the waste
substantially preventing flow of grease to the grease outlet when waste is at rest in the device; and
allowing overflow of grease to the grease outlet when waste is flowing through the device.

### Detailed Description of the Invention

The invention will be more clearly understood from the following description of some embodiments thereof, given by way of example only with reference to the accompanying drawings in which:-
Fig. 1 is a partially cut away perspective view of a waste treatment device of the invention;
Fig. 2 is a cross-sectional view from the side of the waste treatment device of Fig. 1; and
Fig. 3 is a perspective view of a storage vessel of the invention.

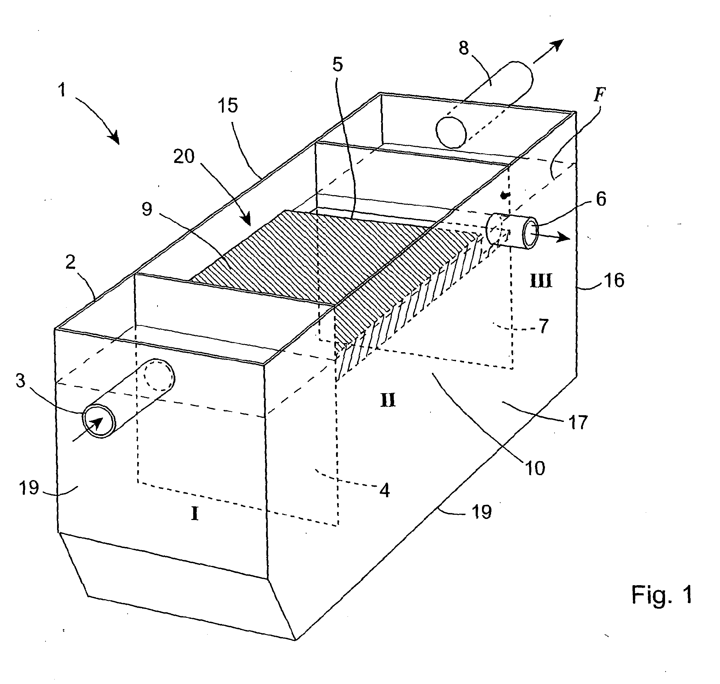

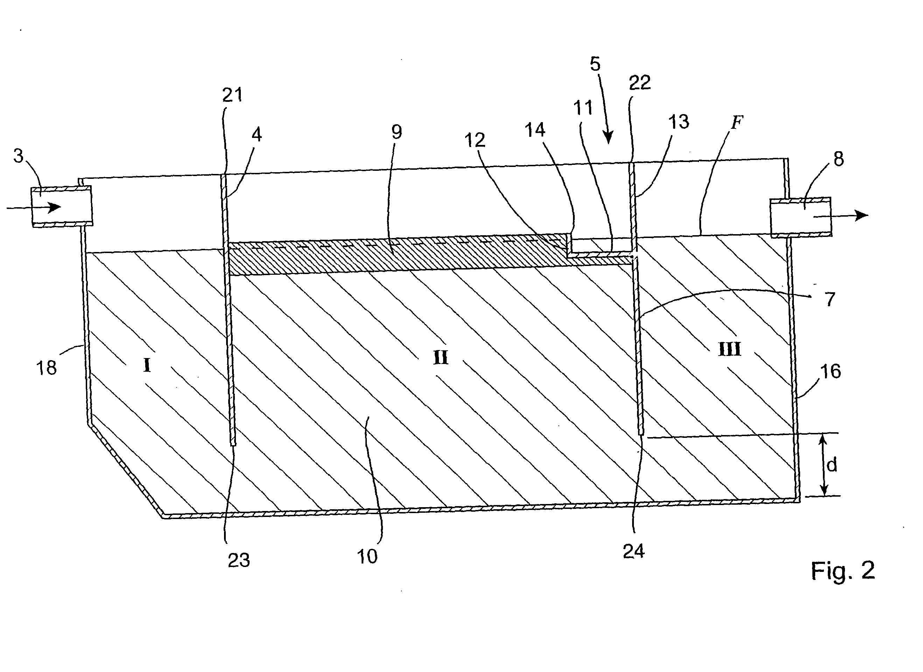

Referring to the Figs. 1 and 2, a waste treatment device 1 comprises a housing 2 having a waste inlet 3, a grease collector 5, a grease outlet 6, and a waste outlet 8. Waste inflow is through the waste inlet 3, and waste flows through the housing 2 with grease passing out through the grease outlet 6 and liquid waste passing out through the waste outlet 8.

The waste inlet 3 and waste outlet 8 in this case are fixed. The level of the waste outlet 8 defines the static waste fill level *F* of the device.

The housing 2 has a substantially parallelepiped form having a base 19, front and rear end walls 18 and 16 and side walls 15 and 17 extending upwardly from the base to define a top opening 20.

The housing also has an inlet baffle 4 and an outlet baffle 7 connected to the side walls 15 and 17 and extending across the path of flow of waste through the housing. The inlet and outlet baffles 4 and 7 control the flow of fluid waste through the housing. The arrangement of the waste inlet 3, the inlet and outlet baffles 4 and 7, and the waste outlet 8 is such that the direction and momentum of the flow of waste is controlled.

The inlet and outlet baffles 4 and 7 together with the housing 2 define an inlet section I, an intermediate waste settlement section II and an outlet section III. The inlet 3 in located in the housing at the inlet section I, and the waste outlet 8 is located in the housing at the outlet section III. The waste settlement section II allows the waste settle and allows the grease to congeal and form a top grease layer 9 which floats on a larger waste layer 10.

The baffles 4 and 7 have the form of plates which are connected to the side walls 15 and 17 extending from near the top flange 20 downwardly towards the base 19 of the housing. The upper edges 21and 22 of the baffles 4 and 7 are arranged at a level above that of the static fluid fill level *F* of the device, while the lower edges 23 and 24 of the baffles 4 and 7 are arranged spaced apart, at a distance d, from the base 19 of the housing, so that waste passing through the housing passes between the baffles 4, 7 and the base of the housing. While in the embodiment shown the baffles 4 and 7 are both spaced apart from the base of the housing by a distance d, it will be appreciated that they may be spaced apart from the base by different distances.

The grease collector 5 is located in the intermediate waste settlement section II in proximity to the outlet baffle 7 and to the top grease layer 9 to collect grease from the top grease layer 9 and to deliver it out through the grease outlet 6. The grease collector 5 comprises a grease collector channel 11 and a grease collector barrier 12. The grease collector barrier 12 substantially prevents flow of grease to the grease outlet 6 when waste is at rest in the device 1, and allows overflow to the grease outlet 6 while waste is flowing through the device. The grease collector barrier 12 comprises an upper edge/weir edge 14 which is located near to the static fluid fill level *F*. The level of the upper weir edge 14 of the grease collector barrier 12 defines the decanting level of the grease collector 5. It has been found that arrangement of the upper weir edge 14 of grease collector barrier 12 a small distance (typically about 16mm above or below the static fluid fill level *F*) is important in the operation of the device. The upper weir edge 14 may be arranged at any distance between 8mm and 14mm above or below the static fluid fill level F to facilitate effective operation of the device.

The grease collector 5 has a substantially u-shaped trough form having a front wall which is this case is defined by the grease collector barrier 12 and a back wall 13 which in this case is defined by the outlet baffle 7. The back wall 13 does not present a collector barrier and is arranged above the static fluid fill level *F* of the device thus preventing waste from entering the grease collector 5 other than by passing over the grease collector barrier 12. Waste other than from the waste settlement section II is prevented from entering the grease collector 5.

The grease collector 5 is arranged to extend across the housing between the side walls 15 and 17 in the embodiment shown. The grease outlet 6 is located at one end of the grease collector channel 1 at one of the side walls 17 of the housing. The grease collector 5 is arranged at an incline sloping downwardly from one side wall 15 of the housing to the other side wall 17 and to the grease outlet 6, to assist flow of grease collected in the grease collector channel 11 to the grease outlet 6. In one embodiment the incline is of the order of 25mm over a grease collector channel 11 length of about 600mm.

The waste outlet 8 and decanting level of the grease collector barrier 11 are below the level of the waste inlet 3. The levels of the waste inlet 3, the waste outlet 8 and the upper edge 14 of the grease collector barrier 12 in this case are all fixed.

In the embodiment shown the grease collector 5 is integrally formed with the outlet baffle 7 and the housing 2. It will however be appreciated that the grease collector 5 and baffle 7 may be formed separately for connection to the housing. Connections between the grease collector 5 and the housing 2 or the baffle 7 may comprise sealing means. The grease collector 5 may be of any suitable form and may be arranged in any suitable location in the housing to enable the collection of grease from the top grease layer.

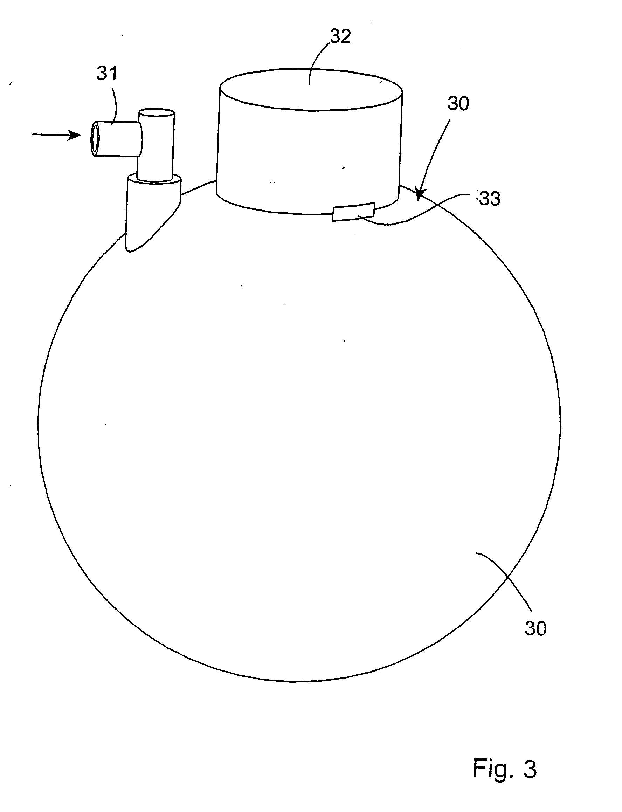

Referring to Fig. 3 a grease storage vessel 30 comprises a combined inlet and vent 31 an access shaft 32 and a level sensor or monitor 33. The inlet 31 is connected by means of a pipe to the grease outlet 6 of the grease collector 5. The inlet 31 of the storage vessel is arranged at a depth below the depth of the grease outlet 6. It will be appreciated that a storage vessel of any suitable form may be used. The storage vessel will normally be placed in a location which allows for ease of access for emptying the vessel. The level monitor allows for easy detection of when it will be necessary to empty the vessel without the requirement for manually checking levels. The monitor may be connected to an alarm system so as to notify the user when the vessel needs to be emptied.

In use, waste is released intermittently into the housing 2 through the inlet 3 into the housing which fills to the static fill level F. The waste is allowed to settle in the waste settlement section II in which grease in the free non-emulsion state in the waste is allowed to congeal and float to the surface to form the top grease layer 9 on top of the larger waste layer 10. The manner of operation and flow of waste through the device is such that there is sufficient residence time for the waste to settle in the settlement section and for the top grease layer 9 to form.

When further waste enters the housing through the waste inlet 3, the inward flow results in a surge which causes sufficient increase in the level and momentum of waste in the device to cause the grease collector barrier 12 to act as a weir. As a result grease from the top grease layer 9 is caused to flow over the upper weir edge 14 of the grease collector barrier 12 and into the grease collector channel 11. The collected grease gravitates and flows through the grease collector channel to the grease outlet 6 and from there into a grease storage vessel 30. Waste in the larger waste layer 10 is also displaced by the surge and is caused to flow out through the waste outlet 8.

The device of the invention is operated automatically under the force generated by the inward flow of waste through the inlet 3. The force and direction of flow through the device is controlled by the arrangement of the inlet and outlet baffles.

The invention has the advantage that it is simple in construction and does not include complex moving parts that are expensive to produce and that require maintenance. In addition the system once installed does not require monitoring to see if there is a build up of grease requiring removal and operation to allow grease removal. Instead the system of the invention has the advantage that grease is automatically removed from the waste.

The system of the invention provides a grease collector connected to a grease storage vessel which has the advantage of requiring reduced levels of maintenance. If grease is not collected and separated from other waste any grease storage vessel would fill up quickly with a mixture of waste and grease, and would therefore require to be emptied frequently. The provision of a system for the effective removal and collection of grease has the advantage that it allows grease to be collected automatically from waste and thus requires less frequent emptying and maintenance.

The system of the invention by effectively collecting and removing the grease from the waste has the further advantage that it allows for the remaining waste, in this case the bulk of the waste from which the grease has been removed, to pass on downstream for further tertiary treatment. The effective removal of grease from the waste allows for the waste to pass on downstream without the problems and effects of grease clogging up downstream plants or sewers or fouling up pumps and associated controls with adverse effects on the environment.

Since waste from which grease has been removed does not require dedicated treatment for the presence of grease, the system of the invention has the advantages that it reduces the overall amount of waste that must be treated for the presence of grease, and the associated costs of that treatment.

The system of the invention is easy to maintain and operate.

The device of the invention operates under the force generated by the inflow of waste, there is no need for a pump or any other driving means. The device is therefore very energy efficient.

The grease collector of the invention has the further advantage that it avoids the consequences of neglect experienced with conventional grease collection and separation traps.

The invention is not limited to the embodiments described but may be varied in construction and detail. For example, while in the embodiment described the housing has a substantially parallelepiped form it will be appreciated that a housing of any suitable form may be used. Also while in the embodiment described the grease collector has a trough form and is arranged transversely across the housing it will be appreciated that a grease collector of any suitable form may be used and that the grease collector may be arranged in different directions.

## Claims

1. A waste treatment device comprising a housing, an inlet for waste, a grease settlement zone within the housing, a grease collector, a grease outlet from the grease settlement zone, and a waste outlet, wherein the device has a static fill level, and the grease collector comprises a grease collector barrier located in proximity to the static fill level and configured to prevent the flow of waste to the grease outlet when waste is at rest in the device and to allow overflow of grease to the grease outlet when waste is flowing through the device.

2. A waste treatment device as claimed in claim 1 wherein the grease collector barrier is arranged such that inflow of waste into the device results in a surge of the waste and a rise in the level of waste in the device which causes the grease collector barrier to act as a weir.

3. A waste treatment device as claimed in any preceding claim, comprising an inlet baffle and an outlet baffle arranged between the waste inlet and the waste outlet.

4. A waste treatment device as claimed in claim 3, wherein the inlet baffle is spaced apart from the waste inlet.

5. A waste treatment device as claimed in claims 3 or 4, wherein the outlet baffle is spaced apart from the waste outlet and the inlet baffle.

6. A waste treatment device as claimed in any of claims 3 to 5 wherein the inlet and outlet baffles extend across the housing and are connected thereto.

7. A waste treatment device as claims in any of claims 3 to 6 wherein the baffles comprise a plate form.

8. A waste treatment system as claimed in any of claims 3 to 7 wherein waste flows between the inlet and waste outlet, and the inlet and outlet baffles extend across the flow path of waste through the device.

9. A waste treatment device as claimed in any of claims 3 to 8 wherein the inlet baffle together with the housing defines a waste inlet section of the device, and the waste inlet is arranged at the inlet section.

10. A waste treatment device as claimed in any of claims 3 to 9 wherein the outlet baffle together with the housing defines a waste outlet section of the device, and the waste outlet is arranged at the waste outlet section.

11. A waste treatment device as claimed in any preceding claim wherein the grease settlement zone is defined by the inlet baffle and the outlet baffle together with the housing.

12. A waste treatment device as claimed in any preceding claim wherein the grease settlement zone is configured to allow waste to settle and to allow grease to congeal and form a top grease layer.

13. A waste treatment device as claimed in any preceding claim, wherein the static fill level is defined by the level of the waste outlet.

14. A waste treatment device as claimed in any preceding claim, wherein the grease collector barrier is located in the grease settlement zone.

15. A waste treatment device as claimed in any preceding claim wherein the grease collector barrier comprises an upper weir edge which is arranged at a level within 16 mm of the level of the static waste fill level of the device.

16. A waste treatment device as claimed in claim 14, wherein the upper weir edge of grease collector barrier is arranged at a level above, below, or substantially equal with, the static waste fill level of the device.

17. A waste treatment device as claimed in any preceding claim, wherein the grease collector barrier is fixed.

18. A waste treatment device as claimed in any preceding claim, wherein the grease collector barrier is arranged in proximity to the outlet baffle.

19. A waste treatment device as claimed in any preceding claim wherein the grease collector comprises a grease collector channel arranged between the grease collector barrier and the grease outlet, and which defines a passageway for grease to the grease outlet.

20. A waste treatment system as claimed in any preceding claim wherein the grease collector is arranged such that the passageway slopes downwardly towards the grease outlet.

21. A waste treatment system as claimed in any preceding claim wherein the grease collector extends between the side walls of the housing.

22. A waste treatment device as claimed in any preceding claim wherein the grease collector has a substantially u-shaped trough form having front, bottom and rear walls.

23. A waste treatment device as claimed in claim 22 wherein the front wall comprises the grease collector barrier.

24. A waste treatment device as claimed in claims 22 or 23 wherein the rear wall has an upper edge which is arranged at a level above the static fill level of the device to prevent waste from passing into the grease collector other than by passing over the grease collector barrier.

25. A waste treatment device as claimed in claims 22 to 24 wherein the rear wall of the grease collector is defined by the outlet baffle.

26. A waste treatment device as claimed in any preceding claim, wherein the level of the waste outlet is fixed.

27. A waste treatment device as claimed in any preceding claim, wherein the inlet is arranged at a level above the static waste fill level of the device.

28. A waste treatment device as claimed in any preceding claim, wherein the level of the inlet is fixed.

29. A waste treatment device as claimed in any preceding claim, wherein the housing comprises a base, and side wall means extending upwardly from the base to define a waste container.

30. A waste treatment device as claimed in claim 29 wherein the side wall means comprise front and rear end walls connected by side walls defining a generally parallelepiped form.

31. A waste treatment system comprising a waste treatment device as claimed in any of claims 1 to 30 and a grease storage vessel connected to the grease outlet.

32. A waste treatment system as claimed in claim 31, wherein the grease storage vessel includes a level sensor.

33. A waste treatment system as claimed in claims 31 or 32 wherein the inlet of the grease storage vessel is arranged at a level below that of the grease outlet to facilitate the flow of grease to the storage vessel.

34. A method for automatically collecting grease from waste containing grease comprises the steps of:
filling a waste treatment device having a grease outlet to the waste fill level of the device
allowing the waste to settle in the device such that grease rises to the surface of the waste
substantially preventing flow of grease to the grease outlet when waste is at rest in the device; and
allowing overflow of grease to the grease outlet when waste is flowing through the device
